# EUROPÄISCHE PATENTSCHRIFT

(11) **EP 4 101 037 B1**
(45) Veröffentlichungstag und Bekanntmachung des Hinweises auf die Patenterteilung: **17.09.2025**
(21) Anmeldenummer: 20824177.8
(22) Anmeldetag: 09.12.2020
(51) Int. Cl.: H01T 13/54, H01T 13/08

(54) **VORKAMMERZÜNDKERZE MIT VERBESSERTER KAPPE**
PRE-CHAMBER SPARK PLUG HAVING AN IMPROVED CAP
BOUGIE D'ALLUMAGE DE PRÉ-CHAMBRE AYANT UN CAPUCHON AMÉLIORÉ

(30) Priorität: 14.01.2020 DE 102020200406
(43) Veröffentlichungstag der Anmeldung: 14.12.2022
(73) Patentinhaber: Robert Bosch GmbH, 70442 Stuttgart (DE)
(72) Erfinder: KASKE, Stephan, 75447 Sternenfels Diefenbach (DE); YILMAZ, Ugur, 71706 Markgroeningen (DE)
(86) Internationale Anmeldenummer: PCT/EP2020/085229
(87) Internationale Veröffentlichungsnummer: WO 2021/144076

(56) Entgegenhaltungen:
- US-A- 1 357 661
- US-A- 1 360 294
- US-A- 1 365 143
- US-A- 1 374 847
- US-A- 1 420 565
- US-A- 4 808 878
- US-A1- 2015 194 793
- US-A1- 2018 219 356

## Beschreibung

### Stand der Technik

Die vorliegende Erfindung betrifft eine Vorkammerzündkerze mit einer verbesserten, individuell an unterschiedliche Brennraumgeometrien anpassbaren Kappe.

Vorkammerzündkerzen sind aus dem Stand der Technik in unterschiedlichen Ausgestaltungen bekannt. Eine Vorkammer der Vorkammerzündkerze wird üblicherweise mittels einer Kappe gegenüber einem Brennraum einer Brennkraftmaschine definiert. In der Kappe sind Durchgangsöffnungen vorgesehen, sodass nach einer Zündung in der Vorkammer Fackelstrahlen durch die Durchgangsöffnungen in den Brennraum der Brennkraftmaschine gelangen können und ein dort befindliches Kraftstoff-Luft-Gemisch entzünden können. Die Kappe der Vorkammerzündkerze weist hierbei eine gleichmäßige, kuppelartige Grundform auf. Es wurde nun festgestellt, dass bei bestimmten Konstellationen einer Einsatzumgebung, beispielsweise durch eine eigene Winkellage der Vorkammerzündkerze im Brennraum oder aufgrund von neben der Vorkammerzündkerze angeordneten weiteren Komponenten, beispielsweise einem Einspritzventil, ungünstige Strömungssituationen herrschen können. Dies kann dazu führen, dass ein Austausch von Frischgas und Restgas in einer Vorkammer der Vorkammerzündkerze nicht mehr oder nur mangelhaft ermöglicht wird. Auch kann durch die Kappenform der Kappe der Vorkammerzündkerze ein Injektor angesprüht werden oder mit heißem Gas angeströmt werden, was zu thermischen Überhitzungen führen kann.

Aus der US 2018/219356 A1, der US 1 374 847 A und der US 1 357 661 A sind jeweils Vorkammerzündkerzen bekannt die eine Vertiefung an der Kappen-Außenseite aufweisen.

### Offenbarung der Erfindung

Die erfindungsgemäße Vorkammerzündkerze mit den Merkmalen des Anspruchs 1 weist demgegenüber den Vorteil auf, dass neben einer einfachen und kostengünstigen Herstellbarkeit, eine Gasströmung in einem Brennraum, in welchen die Vorkammerzündkerze vorsteht, gezielt beeinflusst werden, so dass eine deutlich verbesserte Gasströmungsführung ermöglicht wird. Insbesondere kann ein Ein- und/oder Abströmen von heißen Medien, z.B. heißer Abgasluft, gezielt gesteuert werden. Weiterhin weist die erfindungsgemäße Vorkammerzündkerze einen optimierten Austausch von Frischgas und Restgas in der Vorkammer auf. Hierdurch kann in verschiedensten Betriebssituationen immer ein sicheres Zünden eines Gemisches in der Vorkammer der Vorkammerzündkerze ermöglicht werden. Dies wird erfindungsgemäß dadurch erreicht, dass die Kappe der Vorkammerzündkerze an einer brennraumseitigen Seite eine Vertiefung aufweist. Durch entsprechende Positionierung und Geometrie der Vorkammerzündkerze derart, dass die Vertiefung an der Kappe eine Strömung im Bereich des Injektors oder anderer weiterer Bauteile einer Brennkraftmaschine beeinflusst, können somit die vorstehend aufgezählten Vorteile erreicht werden. Eine geometrische Ausgestaltung der Vertiefung kann dabei an die individuellen Gegebenheiten eines Brennraums angepasst werden.

Erfindungsgemäß ist wenigstens eine erste Durchgangsöffnung in der Kappe vorgesehen, welche in der Vertiefung der Außenseite der Kappe mündet. Somit kann direkt ein Fackelstrahl, welcher aus einer Vorkammer der Vorkammerzündkerze durch die erste Durchgangsöffnung aus der Kappe austritt, durch die Vertiefung an der Außenseite der Kappe strömungsgünstig beeinflusst werden. Durch die Vertiefung kann beispielsweise der durch die erste Durchgangsöffnung austretende Fackelstrahl direkt auf einen Bereich im Brennraum geleitet werden, in welchem ein besonders leicht entflammbares Gemisch von Kraftstoff und Luft vorhanden ist.

Die Unteransprüche zeigen bevorzugte Weiterbildungen der Erfindung.

Besonders bevorzugt münden mehrere Durchgangsöffnungen in der Kappe in der Vertiefung. Hierdurch kann eine besonders hohe Variabilität hinsichtlich einer Strömungsbeeinflussung des aus der Kappe austretenden Gases bzw. der Fackelstrahlen sowie des in die Kappe einströmenden Gases erreicht werden. Somit kann besonders gut Gaswechsel in der Vorkammer der Vorkammerzündkerze ausgeführt werden.

Besonders bevorzugt ist die Vertiefung ausschließlich an einer brennraumseitigen Außenseite der Kappe vorgesehen. Die Innenseite der Kappe ist ohne Vertiefung und/oder ohne Vorsprung oder dergleichen ausgebildet. Besonders bevorzugt ist die Innenseite der Kappe durchgehend konkav ausgebildet.

Gemäß einer besonders bevorzugten Ausgestaltung der Erfindung ist die Vertiefung an der Außenseite der Kappe konkav ausgebildet. Damit kann eine muldenförmige Vertiefung an der Außenseite der Kappe vorgesehen werden, welche besonders strömungsgünstig ausgebildet ist. Die Vertiefung ist dabei vorzugsweise in Form einer Teilkugelfläche oder eines Teil-Ellipsoids vorgesehen.

Gemäß einer weiteren bevorzugten Ausgestaltung der Erfindung weist ein Gehäuse der Vorkammerzündkerze ein Gewinde auf, wobei die Vertiefung der Kappe in Abhängigkeit von einem Gewindeanfang und/oder einem Gewindeende des Gewindes positioniert ist. Dadurch kann sichergestellt werden, dass bei einer Montage der Vorkammerzündkerze eine Position der Vertiefung der Kappe immer an der richtigen Stelle im Brennraum angeordnet wird.

Besonders bevorzugt ist dabei eine Mitte der Vertiefung der Kappe und ein Gewindeanfang am Gehäuse der Vorkammerzündkerze in einer Ebene, welche eine Mittelachse der Vorkammerzündkerze umfasst, angeordnet. Mit anderen Worten liegen die Vertiefung und ein Gewindeanfang der Vorkammerzündkerze auf einer Linie. Weiter bevorzugt ist die Vertiefung der Kappe eine symmetrische Mulde.

Vorzugsweise weist die Kappe wenigstens eine weitere Durchgangsöffnung auf, welche außerhalb der Vertiefung durch die Kappe verläuft. Weiter bevorzugt ist dabei ein erster Winkel α einer Mittellinie der ersten Durchgangsöffnung, welche in der Vertiefung der Kappe mündet, zur Mittelachse der Vorkammerzündkerze unterschiedlich zu einem zweiten Winkel β der weiteren Durchgangsöffnung in der Kappe. Vorzugsweise weist die Kappe zur Mittelachse der Vorkammerzündkerze genau eine einzige Vertiefung auf.

Die Vertiefung, in welcher die erste Durchgangsöffnung mündet, ist asymmetrisch zu einer Mittelachse der Vorkammerzündkerze ausgebildet.

Um eine besonders kostengünstige Herstellbarkeit der Vorkammerzündkerze und der Kappe zu ermöglichen, ist die Kappe vorzugsweise ein MIM-Bauteil (metal injection moulding) oder ein Sinterbauteil.

### Kurze Beschreibung der Zeichnungen

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Schnittansicht einer Vorkammerzündkerze gemäß einem Ausführungsbeispiel der Erfindung, und
- Figur 2: eine schematische, vergrößerte Detailschnittansicht der Kappe der Vorkammerzündkerze von Figur 1.

### Bevorzugte Ausführungsform der Erfindung

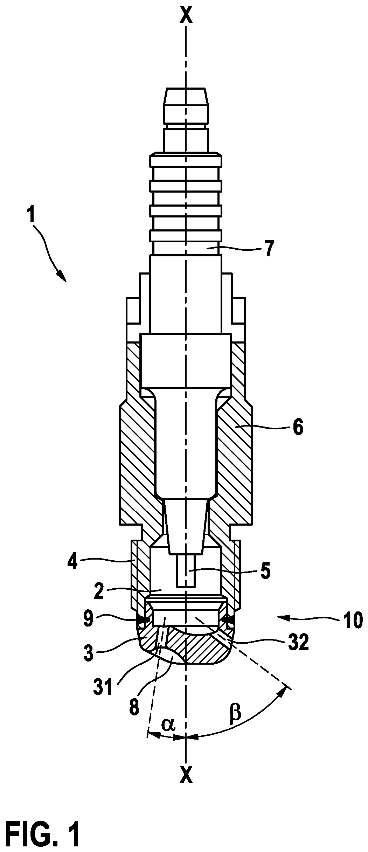

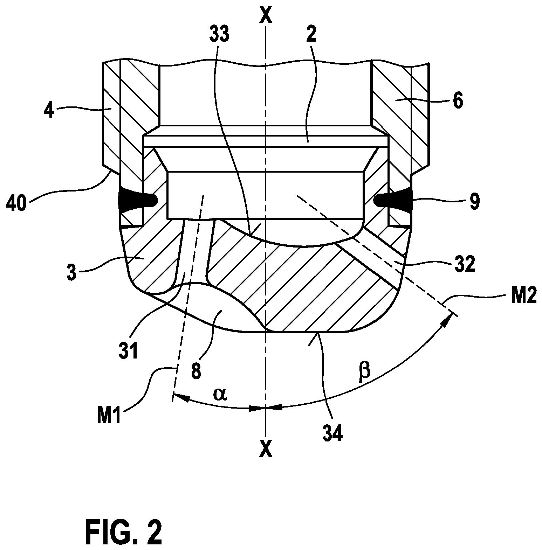

Nachfolgend wird unter Bezugnahme auf die Figuren 1 und 2 eine Vorkammerzündkerze 1 gemäß einem bevorzugten Ausführungsbeispiel der Erfindung im Detail beschrieben.

Wie aus Figur 1 ersichtlich ist, umfasst die Vorkammerzündkerze 1 eine Vorkammer 2, welche durch eine im Schnitt im Wesentlichen U-förmige Kappe 3 definiert ist. Die Kappe 3 ist an einem Gehäuse 6 der Vorkammerzündkerze, beispielsweise mittels einer Schweißverbindung 9 fixiert. Die Kappe 3 ist an einem bauraumseitigen Ende 10 der Vorkammerzündkerze angeordnet.

Die Vorkammerzündkerze 1 umfasst ferner eine Mittelelektrode 5 sowie einen Isolator 7.

Das Gehäuse 6 weist ein Außengewinde 4 auf, welches am brennraumseitigen Ende des Gehäuses 6 angeordnet ist. An das Gehäuse 6 schließt sich die Kappe 3 an.

Das Außengewinde 4 dient zur Fixierung der Vorkammerzündkerze in einem Zylinderkopf oder dergleichen.

In der Kappe 3 sind ferner mehrere Durchgangsöffnungen 31, 32 vorgesehen. Bei einer Zündung in der Vorkammer 2 der Vorkammerzündkerze werden dabei sogenannte Fackelstrahlen durch die Durchgangsöffnungen 31, 32 in einen Brennraum einer Brennkraftmaschine ausgegeben, in welchem dann ein Gemisch aus Kraftstoff und Luft entzündet wird. Position und Anzahl der Durchgangsöffnungen 31, 32 kann dabei variieren.

Da jede Brennkraftmaschine andere Bedingungen hinsichtlich einer Lage der Vorkammerzündkerze 1 zu einem Injektor-Einspritzstrahl und einer Lage des Injektors und weiterer geometrischer Randbedingungen, wie beispielsweise einer Geometrie eines Kolbens und Anordnung weiterer Komponenten am Bauraum aufweist, ist für eine optimierte Strömungsführung eine individuelle Anpassung der Vorkammerzündkerze wünschenswert. Dies wird dadurch erreicht, dass die Kappe 3 asymmetrisch ausgebildet ist.

Die Kappe 3 weist eine Vertiefung 8 an einer brennraumseitigen Außenseite 34 auf, welche in diesem Ausführungsbeispiel eine muldenförmige Vertiefung ist. Die Vertiefung 8 hat dabei eine geometrische Form einer Teilkugelfläche.

Wie im Detail aus Figur 2 ersichtlich ist, mündet dabei eine erste Durchgangsöffnung 31 in der Vertiefung 8. Die erste Durchgangsöffnung 31 ist dabei geradlinig ausgeführt und weist eine Mittellinie M1 auf. Die Mittellinie M1 ist in einem ersten Winkel α zu einer Mittelachse X-X der Vorkammerzündkerze 1 angeordnet.

Figur 2 weist ferner eine zweite Durchgangsöffnung 32 mit einer zweiten Mittellinie M2 auf, welche in einem zweiten Winkel β zur Mittelachse X-X der Vorkammerzündkerze angeordnet ist. Der Winkel β ist dabei größer als der Winkel α.

Des Weiteren weist die Kappe 3 eine durchgehend konkave Innenseite 33 auf.

Durch die asymmetrische Ausgestaltung der Kappe 3 mit der Vertiefung 8, in welche die erste Durchgangsöffnung 31 mündet, kann nun einerseits bei einem Gaswechsel zum Austausch des Gases in der Vorkammer 2 als auch bei einem Austritt von Fackelstrahlen aus der Vorkammer 2 über die erste Durchgangsöffnung 31 eine optimierte Gasströmung erreicht werden. Beispielsweise können die aus der ersten Durchgangsöffnung 31 austretenden Fackelstrahlen so gerichtet werden, dass diese auf einen Bereich in der Brennkammer gerichtet werden, welche eine hohe Zündfähigkeit aufweist.

Weiterhin liegen die erste Mittellinie M1 der ersten Durchgangsöffnung 31 und ein Gewindeanfang 40 des Außengewindes 4 in einer Ebene (in der in Figur 2 gezeigten Schnittebene), wobei die Ebene auch die Mittelachse X-X der Vorkammerzündkerze 1 umfasst. Dadurch kann eine exakte Positionierung der Vertiefung 8 der asymmetrisch ausgebildeten Kappe 3 bei einer Montage der Vorkammerzündkerze 1 an einem Zylinderkopf oder dergleichen erreicht werden. Somit können insbesondere Montagefehler vermieden werden, welche bei einer falschen Positionierung der Vertiefung 8 am Brennraum nicht zu der gewünschten optimierten Gasströmungsführung führen würden.

Somit kann eine vorbestimmte Orientierung der Vertiefung 8 zu einem Gewindeanfang 40 als auch eine vorbestimmte Orientierung der ersten Durchgangsöffnung 31 zum Gewindeanfang 40 erreicht werden.

Somit kann durch die erfindungsgemäße geschickte Idee des Vorsehens wenigstens einer Vertiefung 8 an einer Außenseite der Kappe 3 eine gezielte Gasströmung sowohl beim Ausströmen von Gas aus der Vorkammer 2 als auch beim Einströmen von Gas in die Vorkammer 2 erreicht werden. Eine geometrische Form der Vertiefung 8 kann dabei jeweils an die vorhandenen Gegebenheiten in einer Brennkammer angepasst werden. Die Kappe 3 kann beispielsweise kostengünstig mittels MIM-Verfahren oder mittels Sintern hergestellt werden.

Es sei angemerkt, dass es auch möglich ist, dass mehrere Vertiefungen 8 an der Außenseite 34 der Kappe 3 vorgesehen sind. Auch können mehrere Durchgangsöffnungen in einer Vertiefung der Kappe 3 münden.

## Patentansprüche

1. Vorkammerzündkerze mit einer Mittelachse (X-X), umfassend
- ein Gehäuse (6), und
- eine Kappe (3), welche an einem brennraumseitigen Ende (10) der Vorkammerzündkerze angeordnet ist,
- wobei die Kappe (3) an einer brennraumseitigen Außenseite (34) eine Vertiefung (8) aufweist,
- wobei eine erste Durchgangsöffnung (31) in der Kappe (3) vorgesehen ist, welche in der Vertiefung (8) der Kappe (3) mündet,
**dadurch gekennzeichnet, dass** die Vertiefung (8), in welcher die erste Durchgangsöffnung (31) mündet, asymmetrisch zu einer Mittelachse (X-X) der Vorkammerzündkerze ausgebildet ist.

2. Vorkammerzündkerze nach Anspruch 1, wobei mehrere Durchgangsöffnungen (31, 32) in der Vertiefung (8) der Kappe (3) münden.

3. Vorkammerzündkerze nach einem der vorhergehenden Ansprüche, wobei eine Innenseite (33) der Kappe (3) konkav ausgebildet ist.

4. Vorkammerzündkerze nach einem der vorhergehenden Ansprüche, wobei die Vertiefung (8) konkav ausgebildet ist.

5. Vorkammerzündkerze nach einem der vorhergehenden Ansprüche, wobei das Gehäuse (6) ein Außengewinde (4) aufweist und die Vertiefung (8) der Kappe (3) in Abhängigkeit von einem Gewindeanfang (40) und/oder einem Gewindeende des Außengewindes (4) positioniert ist.

6. Vorkammerzündkerze nach Anspruch 5, wobei eine Mitte der Vertiefung (8) und ein Gewindeanfang (40) am Gehäuse in einer Ebene liegen, welche in einer Mittelachse (X-X) der Vorkammerzündkerze angeordnet ist.

7. Vorkammerzündkerze nach einem der vorhergehenden Ansprüche, wobei die Vertiefung (8) eine symmetrisch ausgebildete Mulde ist.

8. Vorkammerzündkerze nach einem der vorhergehenden Ansprüche, wobei die Kappe (3) wenigstens eine weitere Durchgangsöffnung (32) aufweist, welche außerhalb der Vertiefung (8) durch die Kappe (3) verläuft, und insbesondere wobei ein erster Winkel (α) einer ersten Mittellinie (M1) der ersten Durchgangsöffnung (31) zur Mittelachse (X-X) der Vorkammerzündkerze unterschiedlich zu einem zweiten Winkel (β) der weiteren Durchgangsöffnung (32) zur Mittelachse (X-X) der Vorkammerzündkerze ist.

9. Vorkammerzündkerze nach einem der vorhergehenden Ansprüche, wobei die Kappe (3) genau eine einzige Vertiefung (8) aufweist.

10. Vorkammerzündkerze nach einem der vorhergehenden Ansprüche, wobei die Kappe (3) ein MIM-Bauteil oder ein Sinterbauteil ist.

## Claims

1. Pre-chamber spark plug having a central axis (X-X), comprising
- a housing (6), and
- a cap (3), which is arranged at a combustion-chamber end (10) of the pre-chamber spark plug,
- the cap (3) having a depression (8) on an outer side (34) of the combustion chamber,
- wherein a first through-opening (31), which opens in the depression (8) of the cap (3), is provided in the cap (3),
**characterized in that** the depression (8), in which the first through-opening (31) opens, is formed asymmetrically to a central axis (X-X) of the pre-chamber spark plug.

2. Pre-chamber spark plug according to Claim 1, wherein a plurality of through-openings (31, 32) open in the depression (8) of the cap (3).

3. Pre-chamber spark plug according to either of the preceding claims, wherein an inside (33) of the cap (3) is concave.

4. Pre-chamber spark plug according to any of the preceding claims, wherein the depression (8) is concave.

5. Pre-chamber spark plug according to any one of the preceding claims, wherein the housing (6) has an external thread (4) and the depression (8) of the cap (3) is positioned depending on a thread start (40) and/or a thread end of the external thread (4).

6. Pre-chamber spark plug according to Claim 5, wherein a centre of the depression (8) and a thread start (40) on the housing lie in a plane which is arranged in a central axis (X-X) of the pre-chamber spark plug.

7. Pre-chamber spark plug according to any one of the preceding claims, wherein the depression (8) is a symmetrically formed trough.

8. Pre-chamber spark plug according to any one of the preceding claims, wherein the cap (3) has at least one further through-opening (32), which runs through the cap (3) outside the depression (8), and in particular wherein a first angle (α) of a first centre line (M1) of the first through-opening (31) with respect to the central axis (X-X) of the pre-chamber spark plug differs from a second angle (β) of the further through-opening (32) with respect to the central axis (X-X) of the pre-chamber spark plug.

9. Pre-chamber spark plug according to any one of the preceding claims, wherein the cap (3) has precisely one single depression (8).

10. Pre-chamber spark plug according to any one of the preceding claims, wherein the cap (3) is an MIM component or a sintered component.

## Revendications

1. Bougie d'allumage de préchambre présentant un axe central (X-X), comprenant
- un boîtier (6), et
- un capuchon (3) qui est disposé à une extrémité (10) côté chambre de combustion de la bougie d'allumage de préchambre,
- dans lequel le capuchon (3) présente un creux (8) sur une face extérieure (34) côté chambre de combustion,
- dans lequel une première ouverture de passage (31) est prévue dans le capuchon (3) qui débouche sur le creux (8) du capuchon (3),
**caractérisée en ce que** le creux (8) sur lequel débouche la première ouverture de passage (31) est réalisé de manière asymétrique par rapport à un axe central (X-X) de la bougie d'allumage de préchambre.

2. Bougie d'allumage de préchambre selon la revendication 1, dans laquelle plusieurs ouvertures de passage (31, 32) débouchent sur le creux (8) du capuchon (3).

3. Bougie d'allumage de préchambre selon l'une quelconque des revendications précédentes, dans laquelle une face intérieure (33) du capuchon (3) est réalisée de manière concave.

4. Bougie d'allumage de préchambre selon l'une quelconque des revendications précédentes, dans laquelle le creux (8) est réalisé de manière concave.

5. Bougie d'allumage de préchambre selon l'une quelconque des revendications précédentes, dans laquelle le boîtier (6) présente un filetage mâle (4) et le creux (8) du capuchon (3) est positionné en fonction d'un début de filetage (40) et/ou d'une fin de filetage du filetage mâle (4).

6. Bougie d'allumage de préchambre selon la revendication 5, dans laquelle un centre du creux (8) et un début de filetage (40) sur le boîtier se trouvent dans un plan qui est disposé sur un axe central (X-X) de la bougie d'allumage de préchambre.

7. Bougie d'allumage de préchambre selon l'une quelconque des revendications précédentes, dans laquelle le creux (8) est un renfoncement réalisé de manière symétrique.

8. Bougie d'allumage de préchambre selon l'une quelconque des revendications précédentes, dans laquelle le capuchon (3) présente au moins une ouverture de passage (32) supplémentaire qui s'étend à l'extérieur du creux (8) à travers le capuchon (3), et en particulier dans laquelle un premier angle (α) d'une première ligne médiane (M1) de la première ouverture de passage (31) par rapport à l'axe central (X-X) de la bougie d'allumage de préchambre est différent d'un deuxième angle (β) de l'ouverture de passage (32) supplémentaire par rapport à l'axe central (X-X) de la bougie d'allumage de préchambre.

9. Bougie d'allumage de préchambre selon l'une quelconque des revendications précédentes, dans laquelle le capuchon (3) présente exactement un seul creux (8).

10. Bougie d'allumage de préchambre selon l'une quelconque des revendications précédentes, dans laquelle le capuchon (3) est un composant MIM ou un composant fritté.
